# EUROPEAN PATENT APPLICATION

(11) **EP 1 270 389 A2**
(43) Date of publication of application: **02.01.2003**
(21) Application number: 02013539.8
(22) Date of filing: 18.06.2002
(51) Int. Cl.: B62J 6/12

(54) **Bicycle hub dynamo**

(30) Priority: 21.06.2001 JP 2001188908
(71) Applicant: SANYO ELECTRIC CO. LTD, Moriguchi-shi, Osaka-fu (JP)
(72) Inventor: Fukuda, Hitoshi, Kanzaki-gun, Hyogo-ken (JP)
(74) Representative: VOSSIUS & PARTNER

(57) **Abstract**

A bicycle hub dynamo (30) including: a permanent magnet (7) arranged inside of a hub body; and a hub shaft (11) having a plurality of stator core with a plurality of pole pieces, which are opposed to magnetic poles of the permanent magnet, provided on peripheries of the stator cores (13-15), and a coil (17) wound around a coil bobbin (16) arranged between the stator cores (13,14), wherein a hub body constituting a cap, a hub barrel (4) and a collar (3) of the hub dynamo (30) is formed out of iron, and members other than an ordinary magnetic circuit contributing to generating power are formed out of a nonmagnetic material. It is possible to easily manufacture the hub dynamo (30), to dispense with a yoke which is required in the conventional hub barrel (4) formed out of aluminum alloy and to decrease material cost and the number of assembly steps accordingly. Further, it is possible to prevent a disadvantage, i.e., to prevent a magnetic circuit other than the ordinary magnetic circuit from being formed if the entire hub body is made of iron, to prevent the decrease of a magnetic flux carried to the ordinary magnetic circuit and the decrease of power voltage, to reduce cost and to make the hub (30) dynamo small in size.

## Description

The present invention relates to a bicycle hub dynamo serving as a bicycle generator.

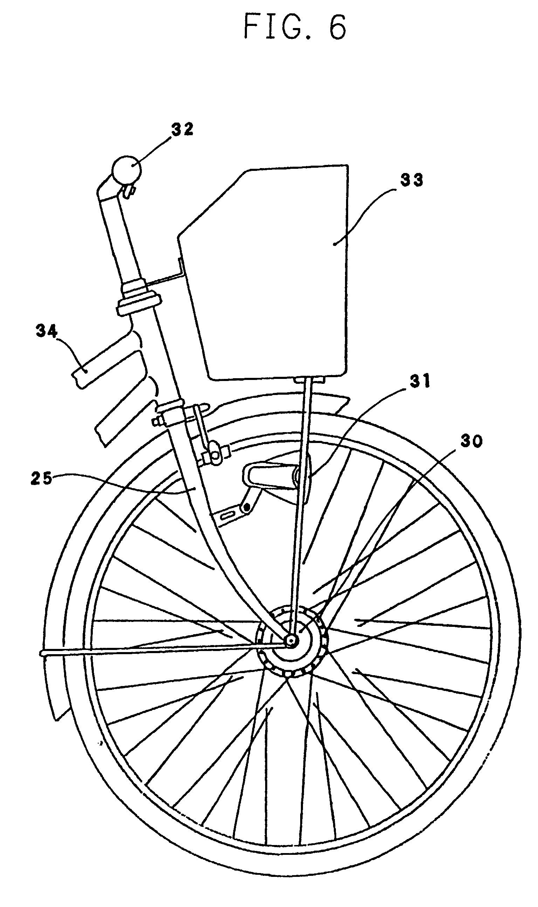

The enlarged view of the front wheel section of a bicycle which is equipped with a hub dynamo for generating the power of a bicycle is shown in Fig. 6. A hub dynamo 30 is mounted on the front wheel or rear wheel section of the bicycle. Here, it shows an example of the hub dynamo 30 mounted on the front wheel section. The bicycle is constituted so that the hub dynamo 30 is incorporated into a hub shaft 11 which rotatably supports a front wheel, the hub shaft 11 is also attached to a front fork 25, and power is supplied to a headlight 31 provided on the lateral side of the front wheel, a taillight (not shown) provided on a rear wheel and the like. The front fork 25 is supported by a main body frame 34 and a handle bar 32 and a front basket 33 are attached to the upper end of the front fork 25.

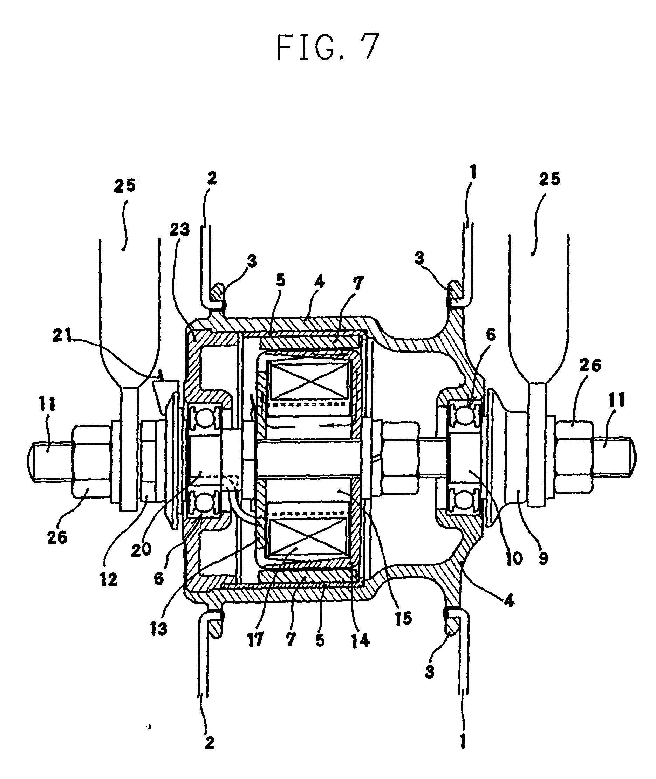

Generally, a conventional hub dynamo for generating the power of a bicycle has a hub body formed out of aluminum alloy which is a nonmagnetic material. A hub dynamo having a hub body formed out of aluminum alloy will next be shown in Fig. 7.

Fig. 7 is a front sectional view of a hub dynamo for power generation. The hub barrel 4 of the hub dynamo is formed out of aluminum and an annular yoke 5 is provided inside of the hub barrel 4. A right spoke 1 coupled to the rim of a front wheel tire is coupled to an aluminum circular collar 3 which is a part of the hub barrel 4 and a left spoke 2 is also coupled to the aluminum circular collar 3 which is a part of the hub barrel 4. The left opening section of the hub barrel 4 is closed by an aluminum cap 23.

Bearings 6 each including bearing units are press-fitted into the central concave section of the hub barrel 4 and that of the cap 23, respectively. A bearing sleeve 10 is fixed to the hub shaft 11 and a bearing sleeve 20 is fixed to the hub shaft 11 so that the left and right bearings 6 do not come off from the hub shaft 11. In addition, the annular yoke 5 and a magnet 7 are fixedly arranged on the inner peripheral surface of the hub barrel 4, thereby constituting a hub dynamo rotation side rotor.

A coil 17 wound around the coil bobbin of the hub dynamo fixed side stator, a pair of right and left stator cores 13 and 14 made of iron and a stator core 15 for magnetically coupling the central sections of the cores 13 and 14 to each other, are fixedly attached to the outer peripheral surface of the hub shaft 11. The bearing 6 on the left side of the hub dynamo is held in the central concave section of the cap 23 by a hub nut 12 with interposing therebetween a washer and an insulating terminal plate provided with a terminal 21 for picking up the output of the hub dynamo. The left side of the hub shaft 11 is fastened to the front wheel fork 25 by a hub nut 26. In addition, the right hub dynamo bearing 6 is held in the central concave section of the hub barrel 4 by fastening a hub nut 26 to the front wheel fork 25 with interposing therebetween a washer and a cover 9.

In the hub dynamo, the hub barrel 4 to which the magnet 7 is fixedly attached is rotated in accordance with the rotation of the wheel of the bicycle and power is generated by the electromagnetic induction action between the magnetic field of the magnet 7 and the coil 17 of the fixed coil bobbins. Since the hub barrel 4 is made of aluminum, a magnetic circuit at this moment is formed by the magnet 7, the annular yoke 5, the coil 17 and the stator cores 13, 14 and 15, and a magnetic flux passes in the direction as indicated by an arrow.

Since the hub barrel 4 is made of aluminum alloy which is a nonmagnetic material, the hub dynamo thus constituted is capable of suppressing the magnetic flux leakage of the magnet and preventing the decrease of generating voltage. However, the hub dynamo has disadvantages that aluminum alloy is expensive and cost cannot be reduced. Besides, since aluminum alloy is lower in strength than iron or the like, it is necessary to make the hub barrel thick, which is disadvantageous to make the hub dynamo small in size.

Therefore, the following hub dynamo has been developed. The hub barrel 4 of the hub dynamo is formed out of iron and the iron hub barrel also serves as the yoke section of a magnet forming a magnetic circuit. By doing so, the size of the hub barrel can be made small by the amount of reduction in thickness in comparison with an aluminum alloy hub barrel, and the cost of the hub dynamo can be decreased accordingly since iron is less expensive than aluminum alloy.

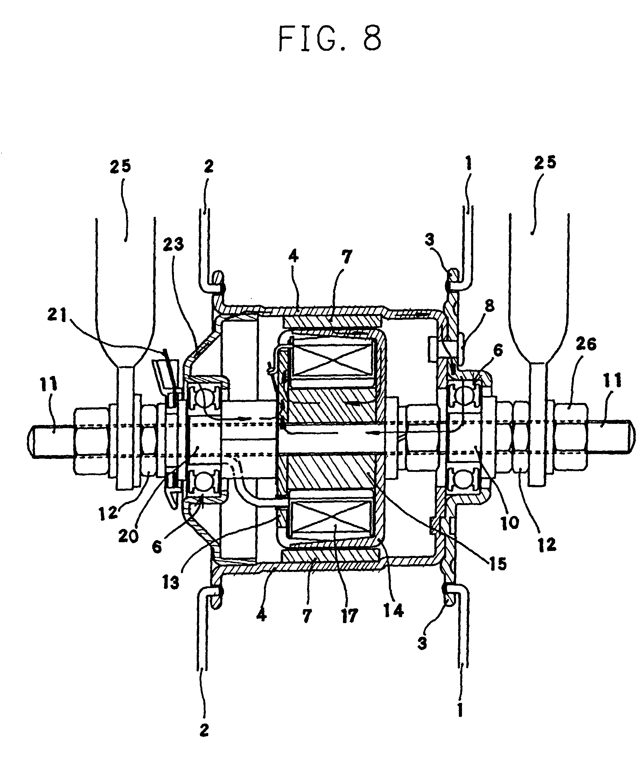

Next, an example of forming the hub barrel 4 of the hub dynamo out of iron will be described with reference to Fig. 8 showing a front sectional view of a hub dynamo for generating power. In the view, the same constituent elements as those in Fig. 7 are denoted by the same reference symbols, respectively. A right spoke 1 coupled to the rim of the front wheel tire of a bicycle is coupled to a circular collar 3 which is formed by pressing an iron plate, and a left spoke 2 is coupled to a hub barrel 4 which is formed by deep drawing an iron plate several times by a pressing machine.

A right bearing 6 including bearing units is press-fitted into the central concave section of the collar 3, and held between the collar 3 and the hub barrel 4 which are fixed by a rivet 8 to each other, whereby the bearing 6 is constituted so as not to come off from the hub barrel 4. In addition, the bearing 6 is constituted so as not to come off from a hub shaft 11 to which a bearing sleeve 10 is fixed. The right side of the hub shaft 11 is fixedly attached to a front wheel fork 25 by a hub nut 26 via the bearing sleeve 10 which can also serve as a washer and a nut 12.

A left bearing 6 is press-fitted into the central concave section of a circular cap 23 which is formed by pressing an iron plate and internally made contact with the bearing sleeve 20. The peripheral edge section of the cap 23 is press-fitted into and fixed to the hub barrel 4. The left side of the hub shaft 11 is fixedly attached to the front wheel fork 25 with hub nut 26 via a washer, an insulating terminal plate which is provided with a terminal 21 for picking up the output of the hub dynamo, and a hub nut 12.

A coil 17 wound around a coil bobbin, a pair of right and left stator cores 13 and 14 made of iron, and a stator core 15 for magnetically coupling the central portions of the cores 13 and 14 to each other, are fixedly attached to the hub shaft 11, thereby constituting a hub dynamo fixed side stator. In addition, a hub dynamo rotation side rotor is provided on the side of the hub barrel 4 and the cap 23. Four pieces of seven-pole magnets 7, for example, are fixedly attached to the inside of the hub barrel 4 and the iron hub barrel 4 also serves as a yoke constituting the magnetic circuit of the magnet.

In the hub dynamo thus constituted, the hub barrel 4 to which the magnet 7 is fixedly attached is rotated in accordance with the rotation of the wheel of the bicycle, and power is generated by the electromagnetic induction action between the magnetic field of the magnet 7 and the coil 17 wound around the coil bobbin of the fixed side stator. A magnetic circuit at this moment is form by the coil 17, the stator cores 13, 14 and 15, the magnet 7 and the iron hub barrel 4.

By manufacturing the hub barrel 4 by pressing iron, a yoke which is required in the conventional hub barrel formed out of aluminum alloy is unnecessary, advantageously decreasing material cost and the number of assembly steps accordingly. In addition, compared with the aluminum alloy hub barrel, cutting and polishing are not required after the formation, thereby making it advantageously possible to greatly decrease the number of manufacturing steps and material cost.

However, since iron is a magnetic material, if the entire hub is formed out of iron, a magnetic loop, different from the ordinary magnetic circuit which carries a magnetic flux from the magnet 7 to the stator cores 13, 14 and 15, is generated by a leakage magnetic flux carried to the stator cores 13 and 14 through the magnet 7, the hub barrel 4, the right and left bearings 6, the bearing sleeves 10, the bearing sleeves 20 and the hub shaft 11. Thus, the magnetic loop disadvantageously decreases the magnetic flux carried to the ordinary magnetic circuit and generating voltage.

According to the conventional bicycle hug dynamo, if aluminum alloy is used for a hub body around the magnet so as to suppress the occurrence of a leakage magnetic flux of the magnet and to prevent decrease of the generating voltage, material cost is disadvantageously increased and the thickness of the aluminum alloy disadvantageously has a bad influence on the miniaturization of the hub dynamo. If the entire hub body is formed out of iron so as to solve these disadvantages, a leakage magnetic flux, in turn, occurs, causing another disadvantage of decreasing generating voltage.

It is, therefore, an object of the present invention to provide a bicycle hub dynamo capable of suppressing the occurrence of a leakage magnetic flux, preventing the decrease of generating voltage, reducing cost and being made small in size by making a hub body made of iron, allowing the iron hub body which is a magnetic member to serve as the yoke section of a magnet constituting a magnetic circuit.

In accordance with a first aspect of the present invention, there is provided a bicycle hub dynamo including: a permanent magnet arranged inside of a hub body; and a hub shaft having a plurality of stator core with a plurality of pole pieces, which are opposed to magnetic poles of the permanent magnet, provided on peripheries of the stator cores, and a coil wound around a coil bobbin arranged between the stator cores, wherein a hub body constituting a cap, a hub barrel and a collar of the hub dynamo is formed out of iron, and members other than an ordinary magnetic circuit contributing to generating power are formed out of a nonmagnetic material.

In accordance with a second aspect of the present invention, there is also provided a bicycle hub dynamo including: a permanent magnet arranged inside of a hub body; and a hub shaft having a plurality of stator cores with a plurality of pole pieces, which are opposed to magnetic poles of the permanent magnet, provided on peripheries of the stator cores, and a coil wound around a coil bobbin arranged between the stator cores, wherein a hub body constituting a cap, a hub barrel and a collar of the hub dynamo is formed out of iron, and a hub shaft or bearing sections provided on both sides of the hub shaft, respectively, other than an ordinary magnetic circuit contributing to generating power, are formed out of a nonmagnetic material.

In accordance with a third aspect of the present invention, there is further provided a bicycle hub dynamo including: a permanent magnet arranged inside of a hub body; and a hub shaft having a plurality of stator cores with a plurality of pole pieces, which are opposed to magnetic poles of the permanent magnet, provided on peripheries of the stator cores, and a coil wound around a coil bobbin arranged between the stator cores, wherein a hub body constituting a cap, a hub barrel and a collar of the hub dynamo is formed out of iron, and at least one of the hub shaft and a bearing sleeve of each of bearing sections provided on both sides of the hub shaft, respectively, other than an ordinary magnetic circuit contributing to generating power, is formed out of a nonmagnetic material.

In this way, since the hub body is formed out of iron and the iron hub body which is a magnetic member is allowed to serve as the yoke section of the magnet constituting the magnetic circuit, it is possible to easily manufacture the hub dynamo, to suppress the occurrence of a leakage magnetic flux carried to a magnetic circuit other than an ordinary magnetic circuit which contributes to generating power, to prevent the decrease of generating voltage, to reduce cost and to make the hub dynamo small in size.
Fig. 1 shows one embodiment of a bicycle hub dynamo according to the present invention;
Fig. 2 is a constitution and an assembly view of a fixed side stator of the hub dynamo according to the present invention;
Figs. 3A and 3B are constitutional views of a rotation side rotor of the hub dynamo according to the present invention;
Fig. 4 is a view showing an assembly state in which the fixed side stator and the rotation side rotor of the hub dynamo are assembled together;
Fig. 5 is an external view of the hub dynamo according to the present invention;
Fig. 6 is an enlarged view of a front wheel section of a bicycle equipped with a hub dynamo;
Fig. 7 is a front sectional view of a conventional hub dynamo having a hub barrel formed out of aluminum alloy; and
Fig. 8 is a front sectional view of a conventional hub dynamo having a hub barrel formed out of iron.

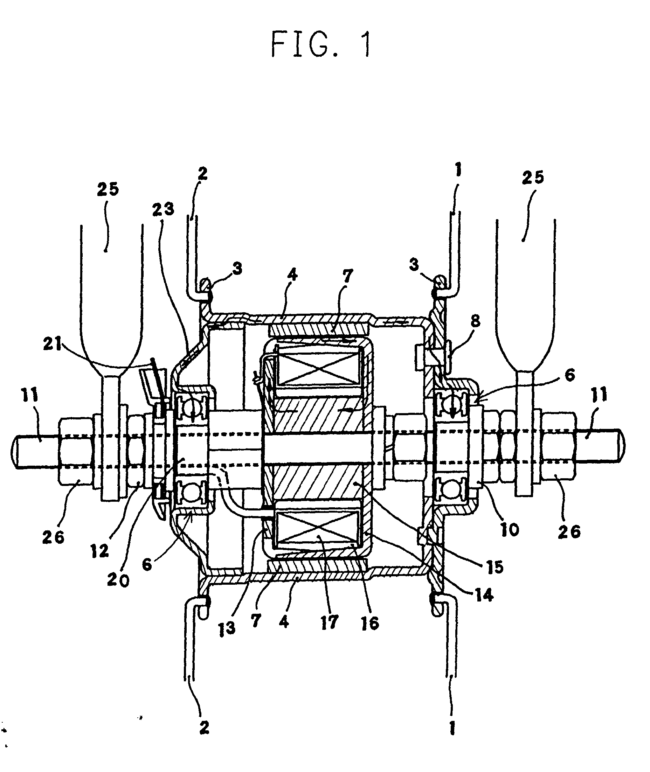

One embodiment of a bicycle hub dynamo according to the present invention will be explained with reference to the drawings. In Fig. 1, substantially the same constituent elements as those in Fig. 8 are denoted by the same reference symbols, respectively. A right spoke 1 coupled to the rim of the front wheel tire of a bicycle is coupled to a circular collar 3 which is formed by pressing an iron plate. A left spoke 2 is coupled to a hub barrel 4 which is formed by deep drawing an iron plate several times by a pressing machine.

A right bearing 6 including bearing units is press-fitted into the central concave section of the collar 3, and held between the collar 3 and the hub barrel 4 which are fixed to each other by a rivet 8, whereby the bearing 6 is constituted not to come off from the hub barrel 4. The bearing 6 is also constituted not to come off from a nonmagnetic hub shaft 11 to which a nonmagnetic bearing sleeve 10 is fixed. The right side of the hub shaft 11 is fixedly attached to a front wheel fork 25 by a hub nut 26 via the nonmagnetic bearing sleeve 10 which can also serve as a washer and a hub nut 12.

A left bearing 6 is press-fitted into the central concave section of a circular cap 23, which is formed by pressing an iron plate, and internally made contact with a nonmagnetic bearing sleeve 20. The peripheral edge section of the cap 23 is press-fitted into and fixed to the hub barrel 4. The left side of the hub shaft 11 is fixedly attached to the front wheel fork 25 by a hub nut 26 via a washer, an insulating terminal plate which is provided with a terminal 21 for picking up the output of the hub dynamo and a hub nut 12.

A coil 17 wound around a coil bobbin 16, a pair of right and left stator cores 13 and 14 made of iron, and a stator core 15 for magnetically coupling the central sections of the cores 13 and 14 to each other, are fixedly attached to the nonmagnetic hub shaft 11, thereby constituting a hub dynamo fixed side stator. The hub dynamo rotation side rotor is provided at the hub barrel 4 and cap 23, and four pieces of seven-pole magnets 7, for example, are fixedly attached to the inside of the hub barrel 4. The iron hub barrel 4 also serves as a yoke which constitutes the magnetic circuit of the magnet 7. A plurality of magnetic pole pieces provided on the peripheries of the stator cores are arranged to be opposed to the magnetic poles of the magnet 7.

In the hub dynamo thus constituted, the hub barrel 4 to which the magnet 7 is fixedly attached is rotated in accordance with the rotation of the wheel of the bicycle, and power is generated by the electromagnetic induction action between the magnetic field of the magnet 7 and the coil 17 wound around the coil bobbin 16 of the fixed side stator. A magnetic circuit at this moment is formed by the coil 17, the stator cores 13, 14 and 15, the magnet 7 and the iron hub barrel 4.

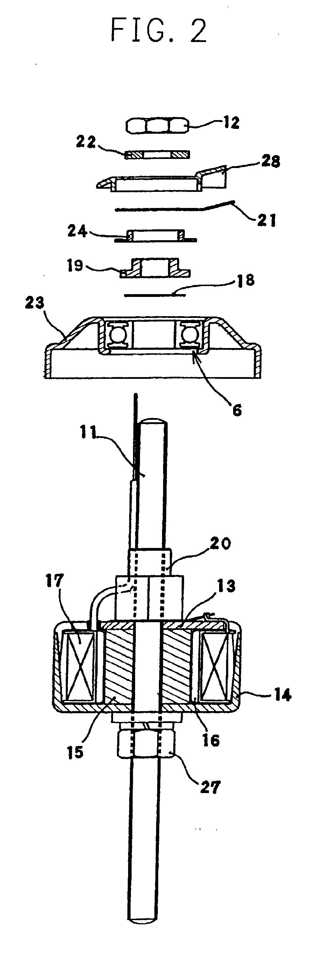

Fig. 2 shows a constitution and an assembly view of the hub dynamo fixed side stator. In the drawing, one end of the assembly of the coil 17 wound around the coil bobbin 16 and the stator cores 13, 14 and 15 is fixedly attached to the nonmagnetic hub shaft 11 by a hub nut 27.

The other end of the assembly of the coil 17 and the stator cores 13, 14 and 15 is fixedly attached to the nonmagnetic hub shaft 11 by the nonmagnetic bearing sleeve 20. The nonmagnetic bearing sleeve 20 is internally made contact with and inserted into the bearing 6 arranged in the central concave section of the circular cap 23 which is formed by pressing the iron plate. With a packing 18 and a sleeve 19 interposed, the terminal 21 for picking up the output of the hub dynamo is held between terminal covers 24 and 28. These elements are fixedly attached and fastened to the other end of the nonmagnetic hub shaft 11 by a washer 22 and the hub nut 12, thereby constituting the fixed side stator.

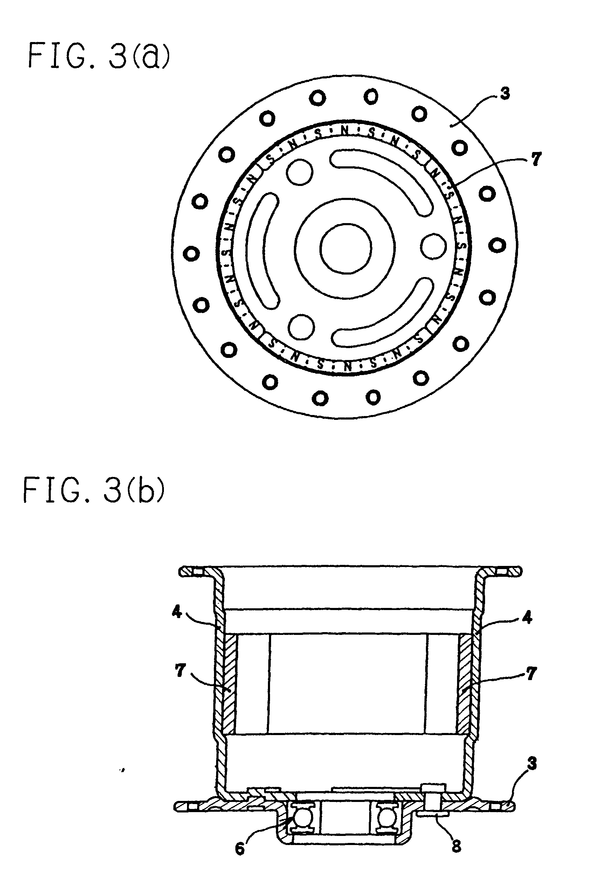

Figs. 3 are constitutional views of a hub dynamo rotation side rotor wherein Fig. 3A is a plan view and Fig. 3B is a side sectional view. Four pieces of seven-pole magnets 7, for example, are fixedly attached to the inside of the hub barrel 4, and a permanent magnet is arranged to be opposed to the stator with N and S poles alternately arranged in the circumferential direction of the magnet. The iron hub barrel 4 also serves as a yoke which constitutes the magnetic circuit of the magnet 7.

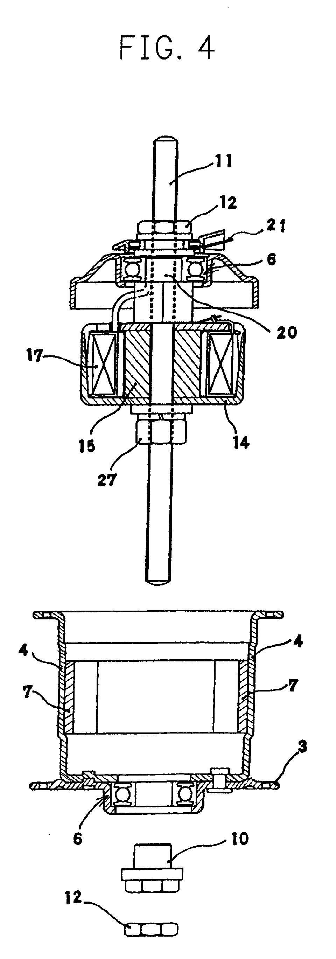

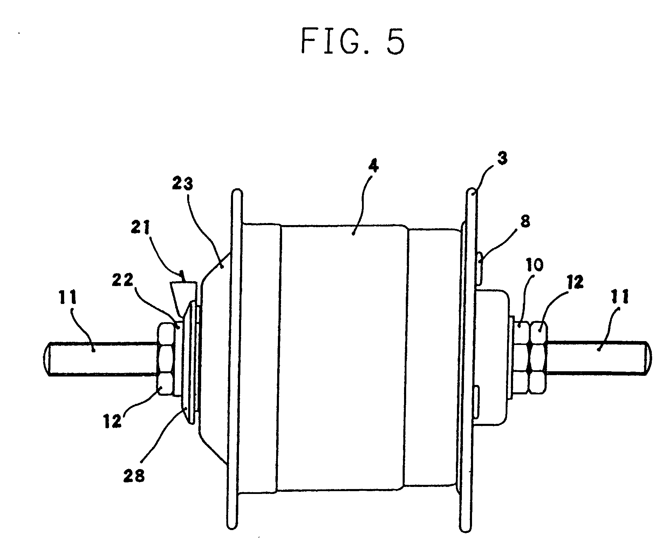

Fig. 4 shows an assembly state in which the fixed side stator and the rotation side rotor of the hub dynamo thus constituted are assembled together. The fixed side stator assembled as shown in Fig. 2 is inserted into the hub barrel 4 of the rotation side rotor shown in Fig. 3 and the peripheral edge section of the cap 23 is press-fitted into and fixed to the hub barrel 4. In addition, the tip end of the hub shaft 11 is fastened to the rotation side rotor by the nut 12 via the nonmagnetic bearing sleeve 10. The external view of the hub dynamo thus constituted is shown in Fig. 5.

In the hub dynamo constituted as stated above, the hub barrel 4 to which the magnet 7 is fixedly attached is rotated in accordance with the rotation of the wheel of the bicycle, and power is generated by the electromagnetic induction action between the magnetic field of the magnet 7 and the coil 17 wound around the coil bobbin 16 of the fixed side stator. A magnetic circuit at this moment is formed by the coil 17, the stator cores 13, 14 and 15, the magnet 7 and the iron hub barrel 4.

By forming the bearing sleeves 10 and 20 and the hub shaft 11 out of nonmagnetic materials, respectively, it is possible to prevent a magnetic loop, which is different from the ordinary magnetic circuit, from being generated by a leakage magnetic flux carried to the stator cores 13 and 14 through the magnet 7, the hub barrel 4, the right and left bearings 6, the bearing sleeves 10, the bearing sleeves 20 and the hub shaft 11 even if the hub barrel 4, the cap 23 and the collar 3 are made of iron which is a magnetic material.

As can be seen, by manufacturing the hub barrel 4 by pressing iron, a yoke which is required in the conventional hub barrel formed out of aluminum alloy is unnecessary, thereby making it possible to decrease material cost and the number of assembly steps accordingly. Further, compared with the aluminum alloy hub barrel, cutting and polishing are not at all required after the formation, thereby making it advantageously possible to greatly decrease the number of manufacturing steps and material cost. Besides, it is possible to prevent a disadvantage, i.e., to prevent a magnetic circuit other than the ordinary magnetic circuit from being formed if the entire hub body is made of iron, and to thereby prevent the decrease of a magnetic flux carried to the ordinary magnetic circuit and the decrease of generating voltage.

In the stated embodiment, description has been given while assuming that all of the bearing sleeves 10, the bearing sleeves 20 and the hub shaft 11 are formed out of nonmagnetic materials, respectively. However, it is not always necessary to form all of these members out of nonmagnetic materials, depending on the generating voltage desired by a user, but it is sufficient that some of the members are made of magnetic members.

As stated so far, according to the bicycle hub dynamo of the present invention, by forming the hub body out of iron and manufacturing the hub barrel by pressing iron, the iron hub body which is a magnetic member can also serve as the yoke of the magnet constituting the magnetic circuit. It is, therefore, possible to easily manufacture the hub dynamo, to dispense with a yoke which is required in the conventional hub barrel formed out of aluminum alloy and to decrease material cost and the number of assembly steps accordingly. Further, compared with an aluminum case, cutting and polishing are not at all required after the formation, thereby making it advantageously possible to greatly decrease the number of manufacturing steps and material cost.

Moreover, by using nonmagnetic members to form members other than the ordinary magnetic circuit which contributes to power generation, it is possible to prevent a disadvantage, i.e., to prevent a magnetic circuit other than the ordinary magnetic circuit from being formed if the entire hub body is made of iron, to prevent the decrease of a magnetic flux carried to the ordinary magnetic circuit and the decrease of power voltage, to reduce cost and to make the hub dynamo small in size.

## Claims

1. A bicycle hub dynamo comprising: a permanent magnet arranged inside of a hub body; and a hub shaft having a plurality of stator core with a plurality of pole pieces, which are opposed to magnetic poles of the permanent magnet, provided on peripheries of the stator cores, and a coil wound around a coil bobbin arranged between the stator cores,
wherein a hub body constituting a cap, a hub barrel and a collar of the hub dynamo is formed out of iron, and members other than an ordinary magnetic circuit contributing to generating power are formed out of a nonmagnetic material.

2. The bicycle hub dynamo of Claim 1, wherein the members other than an ordinary magnetic circuit are a hub or bearing sections provided on both sides of the hub.

3. The bicycle hub dynamo of Claim 2, wherein each of the bearing sections has a bearing sleeve, and at least one of the bearing sleeves and the hub shaft is formed out of a nonmagnetic material.
